Europäisches Patentamt

(19) European Patent Office

Office européen des brevets

(11) Publication number: **0 002 294**
**B1**

(12) **EUROPEAN PATENT SPECIFICATION**

(21) Application number: 78200308.1

(22) Date of filing: 16.11.78

(51) Int. Cl.³: **F 16 L 9/12**, **E 03 B 3/18,**
**E 21 B 43/08**

(54) **A plastics well pipe.**

(30) Priority: 18.11.77 NL 7712759

(43) Date of publication of application:
**13.06.79 Bulletin 79/12**

(45) Publication of the grant of the European patent:
**11.02.81 Bulletin 81/6**

(84) Designated Contracting States:
**BE CH DE FR GB SE**

(56) References cited:
**DE - A - 1 775 674**
**DE - C - 688 201**
**DE - C - 919 937**
**FR - A - 2 386 761**
**US - A - 1 594 788**
**US - A - 2 257 344**
**US - A - 3 379 221**
**US - A - 3 516 448**

(73) Proprietor: WAVIN B.V.
251 Händellaan
NL-8031 EM Zwolle (NL)

(72) Inventor: ter Wijlen, Hendrikus
63 Marsstraat
NL-7782 RJ DE KRIM (NL)

(74) Representative: van der Veken, Johannes Adriaan
et al,
EXTERPATENT Postbus 90649 Willem
Witsenplein 3 & 4
NL-2509 LP 's-Gravenhage (NL)

Courier Press, Leamington Spa, England.

## A plastics well pipe

The invention relates to a plastics well pipe comprising a perforated wall.

Plastics well pipes which are used at large depths, for recovering fluids, e.g. water or oil, are known in the art.

A plastics well pipe is known for example, which consists of a thermosetting resin reinforced with glass filaments, the wall of said plastics well pipe comprising slots for the passage of water or oil. This plastics well pipe is disadvantageous, in virtue of the fact that reinforcing filaments are cut through when slots are formed in the wall of the pipe, thus causing a decrease in the strength of the pipe. This is particularly disadvantageous as these plastics well pipes are used at large depths where high strength properties are required so that the pipes are resistant to the pressures at those large depths.

In order to prevent a decrease in the properties of strength of such plastics well pipe it has been suggested in US—A—3516448 to wind the reinforced filaments in the form of glass filaments, in predetermined directions and to form the slots such, that cutting through of glass filaments occurs as little as possible. This pipe has the disadvantage that the manufacture requires much labour expenditure as the step of forming the slots in a predetermined direction can only be performed by skilled labourers.

There is also known from DE—C—919937 a plastics well pipe of thermoplastics, comprising slots or bores in its wall but this pipe presents the disadvantage that the wall thickness of these plastics well pipes must be great in order to meet the strength requirements. This involves the use of a high amount of plastics, and a high weight of such pipes which makes the handling of the pipes and an instalment for recovering liquids, such as water or oil, extremely labourexpensive.

The invention now aims to provide a plastics well pipe comprising a perforated wall, and meeting the prescribed strength requirements at a substantial lower use of plastics in the case of thermplastics pipes, their installment being much more simple due to their lower weight. On the other hand in the case of fibre reinforced pipes the wall thickness of the pipes may be chosen much smaller and this causes a substantial saving of resin.

The above aim is attained in accordance with the invention in that the plastics pipe comprises an inner wall and an outer wall, longitudinal connecting partitions being integral with the inner and outer wall extending thereinbetween and the channels formed by the connecting partitions being connected to the outside of the channels through bores in the outer wall of said pipe.

Due to a lower hydraulic entrance resistance in consequence of a smaller penetration depth through the wall the liquid is caused to flow easily through the bores in the longitudinal channels formed by the connecting partitions, and subsequently to be discharged through the longitudinally extending channels.

Another advantage of the plastics well pipe according to the invention is that the cutting members are used for forming the bores have a longer span of life, as a smaller wall thickness has to be perforated.

As the abovedescribed channels have a relatively small cross section they also act as a kind of capillary channels, so that larger quantities of liquids can be recovered than by means of the known plastics well pipes. Preferably, at parts of the inside of the plastics well pipe a part of the inner wall of the pipe has been removed thus facilitating liquid present in the channels to flow directly into the interior of the plastics well pipes.

It should be noted that a plastics pipe including an outer wall and an inner wall, and longitudinal connecting partitions being integral with the inner and outer wall extending therebetween thus forming longitudinal channels is known per se from DE—A—1.775 674.

Furthermore, DE—C—688201 discloses a well pipe comprising an outer wall provided with slots and a concentric inner wall provided with apertures. This pipe presents the disadvantage that liquids penetrating through the slots are not subjected to capillary forces such as in the well pipe of the invention.

In a very advantageous embodiment said removed parts of the inner wall, are annular, which are very expediently adjacent the end of a plastics well pipe in accordance with the invention.

The said parts can also possibly be removed in a helical way in the pipe.

Though the connecting partititions may be straight partitions, in a very preferred embodiment the partitions are formed such that the longitudinal channels present a round or elliptical cross-section and preferably a rounded cross-section, particularly a circular cross section.

The bores may consist expediently of slots extending parallel to the longitudinal direction of the plastics well pipe.

The bores in the form of slots may also extend helically around the outside of the pipe.

The invention will now be illustrated by means of an embodiment as shown in the drawing, wherein:

Fig. 1 shows a longitudinal section of a first embodiment of a plastics well pipe according to the invention;

Fig. 2 shows a longitudinal section of a further embodiment of a plastics well pipe according to the invention; and

Figs. 3a,3b,3c, and 3d show parts of possible cross sections of plastics well pipes according to Figs. 1 and 2 however, the longitudinally extending connecting partitions, being shaped differently.

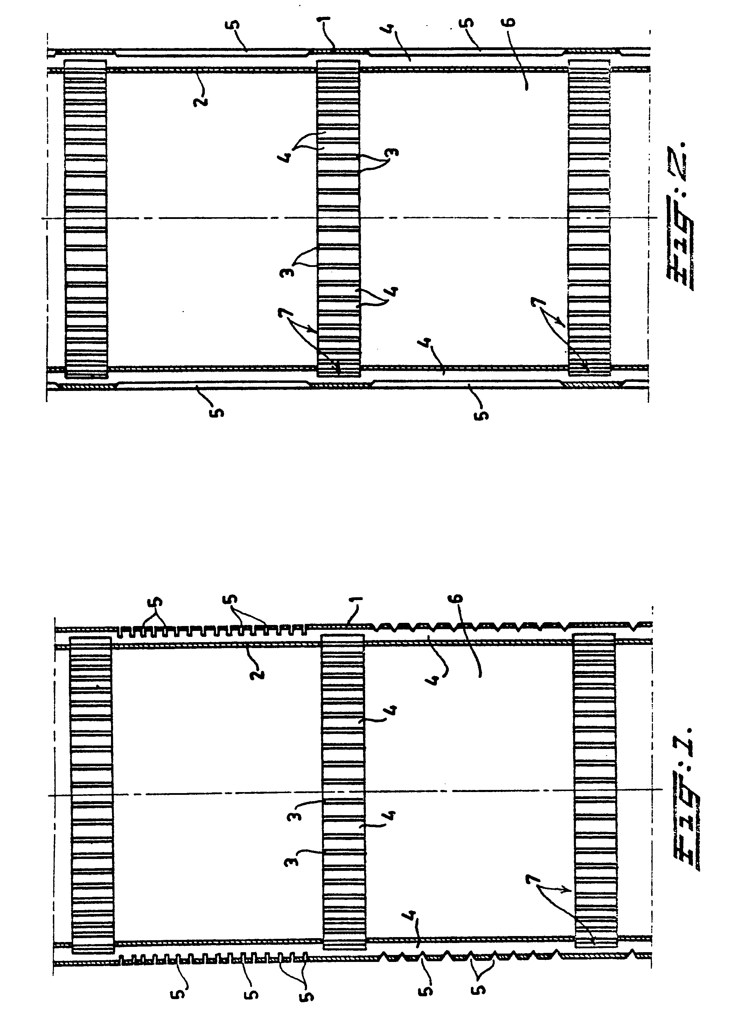

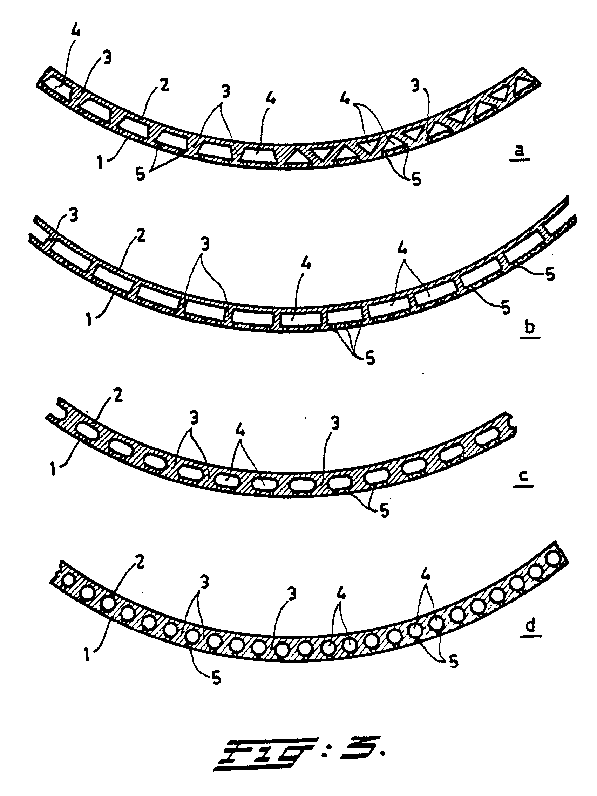

Figs 1 and 2 show a plastics well pipe of polyvinylchloride in accordance with the invention, comprising an outer wall 1 and an inner wall 2, said inner wall and outer wall being interconnected by longitudinally extending partitions (see Fig. 3d). The connecting partitions are divided equidistantly along the circumference of the pipe.

The various longitudinally extending connecting partitions 3, form longitudinally extending channels 4, having a round cross section owing to the particular shape of the connecting partitions 3, as shown in Fig. 3d.

The outer wall of the pipe comprises bores in the form of slots 5, which extend longitudinally in Fig. 2, and which serve to connect the longitudinally extending channels 4 to the outside of the pipe. It will be clear that the form of said slots may vary and that they may also consist of small cylindrical bores. However, it has been found that slots provide a faster supply of liquid from the outer side of such a plastics well pipe towards the inner side of the channels.

The bores or perforations in the form of slots may have a tangentially or helically extending shape, as shown in the upper part of Fig. 1. The lower-most part of the pipe as shown in Fig. 1 is provided with tangential slots, the slots now being wedge-shaped in cross section.

In order to facilitate the discharge of liquid from the longitudinally extending channels 4 towards the inner side of the plastics well pipe according to the invention the inner wall of the plastics well pipe has been removed in the annular parts 7, so that the liquid present in the channels 4 can flow directly into the interior of the plastics well pipe. These parts 7 can also extend helically with each pitch.

It has been found that very high yields can be obtained in using such plastics well pipes.

The said annular parts without an inner wall are appropriately formed near the ends of a plastics well pipe in accordance with the invention as especially at the latter points the inner wall of a similar plastics well pipe can be easily removed and in a later connection of such a pipe with another pipe at that point a socket is used as a connecting part which serves as a reinforcing pipe part.

Fig. 3a shows part of a cross section of a plastics well pipe in accordance with the invention, the longitudinally extending connecting partitions 3 now being formed thus that the channels 4 have a trapezedoial cross section.

It will be evident that connecting partitions 3 may be disposed, as shown in the right-hand part of Fig. 3a such, that the channels 4 present a triangular cross section. Slots 5 secure the supply of liquid to the channels.

Fig. 3b shows a further embodiment, the connecting partitions now being straight partitions and extending in a longitudinal direction while forming longitudinal channels 4 having a substantial rectangular cross section for receiving liquid. Slots 5 secure the desired liquid supply.

Fig. 3c shows a plastic well pipe according to the invention having channels 4 with an elliptical cross section said channels being connected through slots 5 to the outside of the plastics pipe.

Fig. 3d finally shows a plastics well pipe in accordance with the invention having longitudinal channels 4 with a round cross section, whereby a plurality of longitudinal channels 4 are connected to the outside of the pipe through longitudinal slots 5.

It is obvious that an annular part of the inner wall of the plastics well pipe according to the invention need not be removed along the whole circumference but only at certain points of the inner wall. For that matter, a higher and better strength, as well as rigidity of the plastics well pipe in accordance with the invention, can be ensured under those circumstances.

Advantageously the plastics well pipe in accordance with the invention consists of polyvinylchloride, but other rigid thermoplastics can also be used to that aim. Owing to the low cost price of polyvinylchloride this thermoplastics is preferred. A plastics pipe of a fibre-reinforced thermosetting resin is, however, also extremely suitable for manufacturing a plastics well pipe according to the invention.

**Claims**

1. A plastics well pipe comprising a perforated wall, characterized in that the plastics well pipe includes an outer wall (1) and an inner wall (2), longitudinal connecting partitions (3) being integral with the inner and outer wall extending thereinbetween and the channels (4) formed by the connecting partitions being connected to the outside of the channels (4) through bores (5) in the outer wall of said pipe.

2. A plastics well pipe as claimed in claim 1, in which the connecting partitions are divided equidistantly along the circumference of the pipe.

3. A plastics well pipe as claimed in claim 1 or 2, in which the cross section of the channels is substantially round.

4. A plastics well pipe as claimed in any one of the preceding claims, in which the bores are round.

5. A plastics well pipe as claimed in any one of claims 1—3, in which the bores are slots which extend parallel to the longitudinal direction of the pipe.

6. A plastics well pipe according to one of the claims 1—3, in which the bores extend helically around the circumference of the pipe.

7. A plastics well pipe according to any one of the preceding claims, in which the pipe consists of a thermoplastics, such as polyvinylchloride.

8. A plastics well pipe according to any one of claims 1—6, in which the pipe consists of a fibre reinforced thermosetting resin.

9. A plastics well pipe according to any one of the preceding claims, in which at parts of the inside of the plastics well pipe a part of the inner wall of the pipe has been removed.

10. A plastics well pipe according to claim 9, in which said removed parts of the inner wall are annular.

11. A plastics well pipe according to claim 9 or 10, in which said removed inner wall parts are adjacent the end of the pipe.

## Revendications

1. Tuyau de forage en matière plastique à paroi perforée, caractérisé en ce qu'il comprend une paroi extérieure (1) et une paroi intérieure (2), des cloisons de liaison longitudinales (3) formant partie intégrante avec les parois intérieure et extérieure et s'étendant entre ces dernières, les canaux (4) formés par les cloisons de liaison étant reliés à leur environnement extérieur par des perçages (5) pratiqués sur la paroi extérieure du tuyau.

2. Tuyau selon la revendication 1, caractérisé en ce que les cloisons de liaison (3) sont réparties de manière équidistante sur la circonférence du tuyau.

3. Tuyau selon la revendication 1 ou 2, caractérisé en ce que les canaux (4) ont une section transversale sensiblement circulaire.

4. Tuyau selon l'une quelconque des revendications 1 à 3, caractérisé en ce que les perçages (5) sont circulaires.

5. Tuyau selon l'une quelconque des revendications 1 à 3, caractérisé en ce que les perçages (5) sont constitués par des fentes qui s'étendent parallèlement à la direction longitudinale du tuyau.

6. Tuyau selon l'une quelconque des revendications 1 à 3, caractérisé en ce que les perçages (5) s'étendent selon une hélice autour de la circonférence du tuyau.

7. Tuyau selon l'une quelconque des revendications 1 à 6, caractérisé en ce qu'il est constitué d'une matière thermo-plastique, tel que du chlorure de polyvinyle.

8. Tuyau selon l'une quelconque des revendications 1 à 6, caractérisé en ce qu'il est constitué d'une résine thermo-durcissable renforcée par des fibres.

9. Tuyau selon l'une quelconque des revendications 1 à 8, caractérisé en ce qu'une partie de la paroi intérieure (2) du tuyau est ajourée sur des parties de l'intérieur du tuyau.

10. Tuyau selon la revendication 9, caractérisé en ce que les parties ajourées de la paroi intérieure (2) sont annulaires.

11. Tuyau selon la revendication 9 ou 10, caractérisé en ce que les parties ajourées de la paroi intérieure (2) sont situées au voisinage de l'extrémité du tuyau.

## Patentansprüche

1. Kunststoff-Schachtrohr mit einer perforierten Wand, dadurch gekennzeichnet, daß das Kunststoff-Schachtrohr eine Außenwand (1) und eine Innenwand (2) umfaßt, in Längsrichtung verlaufende Verbindungszwischenwände (3) einstückig mit der Innen- und der Außenwand ausgebildet sind und sich zwischen diesen erstrecken und die von den Verbindungszwischenwänden gebildeten Kanäle (4) mit der Außenseite der Kanäle (4) durch Bohrungen (5) in der Außenwand des Rohres verbunden sind.

2. Kunststoff-Schachtrohr nach Anspruch 1, dadurch gekennzeichnet, daß die Verbindungszwischenwände abstandsgleich über den Umfang des Rohres verteilt sind.

3. Kunststoff-Schachtrohr nach Anspruch 1 oder 2, dadurch gekennzeichnet, daß der Querschnitt der Kanäle im wesentlichen rund ist.

4. Kunststoff-Schachtrohr nach einem der vorhergehenden Ansprüche, dadurch gekennzeichnet, daß die Bohrungen rund sind.

5. Kunststoff-Schachtrohr nach einem der Ansprüche 1 bis 3, dadurch gekennzeichnet, daß die Bohrungen Schlitze sind, die sich parallel zur Längsrichtung des Rohres erstrecken.

6. Kunststoff-Schachtrohr nach einem der Ansprüche 1 bis 3, dadurch gekennzeichnet, daß sich die Bohrungen spiralförmig um den Umfang des Rohres erstrecken.

7. Kunststoff-Schachtrohr nach einem der vorhergehenden Ansprüche, dadurch gekennzeichnet, daß das Rohr aus einem thermoplastischen Kunststoff, wie Polyvinylchlorid, besteht.

8. Kunststoff-Schachtrohr nach einem der Ansprüche 1 bis 6, dadurch gekennzeichnet, daß das Rohr aus faserverstärktem, wärmehärtbarem Kunstharz besteht.

9. Kunststoff-Schachtrohr nach einem der vorhergehenden Ansprüche, dadurch gekennzeichnet, daß in Bereichen der Innenseite des Rohres ein Teil der Innenwand des Rohres weggenommen ist.

10. Kunststoff-Schachtrohr nach Anspruch 9, dadurch gekennzeichnet, daß die weggenommenen Teile der Innenwand ringförmig sind.

11. Kunststoff-Schachtrohr nach Anspruch 9 oder 10, dadurch gekennzeichnet, daß die weggenommenen Innenwandteile nahe dem Rohrende gelegen sind.

Fig.1.

Fig.2.

FIG: 5.